# EUROPEAN PATENT APPLICATION

(11) **EP 4 611 365 A1**
(43) Date of publication of application: **03.09.2025**
(21) Application number: 25161122.4
(22) Date of filing: 28.02.2025
(51) Int. Cl.: H04N 9/31, G03B 21/56, G03B 21/60, G03B 21/606, A63G 31/00, A63G 31/02, A63G 31/06, A63G 31/08

(54) **DYNAMIC AUGMENTED PROJECTED SHOW ELEMENTS**

(30) Priority: 01.03.2024 US 202418592863
(71) Applicant: Disney Enterprises, Inc., Burbank, CA 91521 (US)
(72) Inventor: Ayala, Alfredo Medina Jr., West Covina (US); Gathany, Nicholas Daniel, Culver City (US); Bogie, Jonathan, Eugene (US); Uramoto, Brent Yuzo, Honolulu (US); Fidaleo, Douglas, Santa Clarita (US); Peavy, Joel, Poway (US)
(74) Representative: Jarrett, Daniel Phillip

(57) **Abstract**

A method includes determining an orientation of a mechanically animated surface relative to one or more projectors configured to project content onto the mechanically animated surface, dynamically rendering the content based on one or more parameters derived from the orientation of the mechanically animated surface relative to the one or more projectors, and presenting the content on the mechanically animated surface using the one or more projectors.

## Description

### FIELD

The present application relates to systems and methods of presenting content using projections and animatronic figures.

### BACKGROUND

In amusement park rides, integrated audio and visual effects can be implemented to enhance attractions or scenes within the ride. In some applications, head, face, and other components of animatronic figures have been developed that combine one or more projection systems with silicone or other appropriate skin materials to implement animated, still, coordinated, and/or sequential visual effects. However, applying projection onto an animatronic or other robotic systems typically requires a tedious manual calibration and approach to allow the projection to be aligned with the animatronic. Further, many animatronics rely on mechanical actuators to generate animation or other movements, which can wear the skin or other covering materials over time, causing costly repairs.

### BRIEF SUMMARY

Aspects and features of the present disclosure are set out in the appended claims.

### OVERVIEW OF DISCLOSURE

An example method disclosed herein includes determining an orientation of a mechanically animated surface relative to one or more projectors configured to project content onto the mechanically animated surface, dynamically rendering the content based on one or more parameters derived from the orientation of the mechanically animated surface relative to the one or more projectors, and presenting the content on the mechanically animated surface using the one or more projectors.

In some examples, the method may further include dynamically rendering one or more movements of the mechanically animated surface, where the movements of the mechanically animated surface are synchronized to the content.

In some examples, the content may be dynamically rendered using vertex data and animation data.

In some examples, the orientation of the mechanically animated surface relative to the one or more projectors may be determined based on input from one or more animatronic sensors associated with the mechanically animated surface and the one or more projectors.

In some examples, the one or more parameters include one or more of an angle of the projection, a ratio of the projection and an intensity of the projection.

An example method disclosed herein includes receiving input from at least one animatronic sensor associated with an animatronic, where the animatronic includes a mechanically animated surface and deriving positional information for the mechanically animated surface from the input. The method further includes dynamically rendering a next frame of content projected onto the mechanically animated surface based on the positional information and providing the next frame of content to at least one projector projecting the content onto the mechanically animated surface.

In some examples, the method may further include dynamically rendering one or more movements of the mechanically animated surface based on the positional information, where the movements of the mechanically animated surface are synchronized to the next frame of content.

In some examples, the method may further include providing the one or more movements of the mechanically animated surface to a control system of the animatronic.

In some examples, the next frame of content may be dynamically rendered using vertex data and animation data.

In some examples, the at least one animatronic sensor may be a camera.

In some examples, the method may further include receiving additional input from the sensor as the content is projected onto the mechanically animated surface.

In some examples, the next frame of content may be dynamically rendered using a game engine.

An example system disclosed herein includes one or more projectors and an animatronic comprising a mechanically animated surface. The system further includes a performance system in communication with the one or more projectors and the animatronic, where the performance system is configured to dynamically render a projection of content from the one or more projectors onto the mechanically animated surface and one or more movements of the mechanically animated surface, where the projection is synchronized with the one or more movements of the mechanically animated surface.

In some examples, the performance system may include a real-time rendering engine in communication with the projector and a mechanical control system of the animatronic.

In some examples, the performance system may be further configured to determine the one or more movements of the mechanically animated surface.

In some examples, the performance system may be further configured to determine an orientation of the mechanically animated surface relative to the one or more projectors, where the performance system is configured to dynamically render the projection based on the orientation of the mechanically animated surface relative to the one or more projectors.

In some examples, rendering the content may include rendering the content to be presented by two or more projectors.

In some examples, the system may include one or more animatronic sensors associated with the animatronic, where the performance system is further configured to derive positional information for the mechanically animated surface from input to the one or more animatronic sensors and dynamically render a next frame of the content based on the positional information.

In some examples, the performance system may be further configured to provide the next frame of content to the one or more projectors.

Additional embodiments and features are set forth in part in the description that follows, and will become apparent to those skilled in the art upon examination of the specification and may be learned by the practice of the disclosed subject matter. A further understanding of the nature and advantages of the present disclosure may be realized by reference to the remaining portions of the specification and the drawings, which form a part of this disclosure. One of skill in the art will understand that each of the various aspects and features of the disclosure may advantageously be used separately in some instances, or in combination with other aspects and features of the disclosure in other instances.

### BRIEF DESCRIPTION OF THE SEVERAL VIEWS OF THE DRAWINGS

FIG. 1 illustrates an example performance system in communication with a projector and a mechanically animated surface.
FIG. 2 illustrates a schematic diagram of an example performance system in communication with the projector and the mechanically animated surface.
FIG. 3 illustrates a schematic diagram of an example performance system
FIG. 4 is an example computing system used in various examples of the disclosure.
FIG. 5 is a flow chart illustrating an example process for projecting content onto a mechanically animated surface.
FIG. 6 is a flow chart illustrating an example process for adjusting the projection of content onto a mechanically animated surface based on sensor input.

### DETAILED DESCRIPTION

The systems and methods described herein may be utilized to generate realistic animatronic characters (e.g., movable robotic systems) and other dynamic elements. Animatronics are often used to provide dynamic and realistic visual elements in amusement park attractions and other settings. For example, animatronics are often used to depict dynamic characters that can create an immersive environment and interact with guests in a realistic manner. Such animatronics may be more realistic when capable of making finer movements, such as movements of the face. For example, movements of eyebrows, eyes, lips, wrinkles, and the like. Such fine movements, when implemented using solely mechanical means, may use specialty mechanical components, which may be expensive and complex to implement and maintain.

Using solely mechanical means (e.g., motors) to implement finer movements may lead to higher costs of development and upkeep, increased downtime, and shorter lifespan for animatronic figures. For example, motors may wear out after continuous use over long periods of time, complex mechanical systems can be expensive to design and build, and motors used in such systems may be custom built, such that they may be difficult to source or replace. Further, continuous mechanical movements may cause wear on other parts of animatronics. For example, skin (or other elastic covering) of an animatronic may tear with repeated movements, leading to additional upkeep and increased downtime of the animatronic. Light and projections may be utilized in conjunction with mechanical means to provide fine movements, with motors or other mechanical components being utilized for larger movements of the animatronic. By using mechanical components for larger movements, the mechanical systems used in the animatronic may be simplified, leading to easier implementation and reduced wear and tear on the animatronic. Such simplified systems may, accordingly, lead to less downtime for animatronics.

Animatronic figures can also be made more realistic (e.g., higher fidelity) by projecting light onto the animatronic figures. For example, light and projections may be utilized to provide details, such as bloodflow, shadows, skin texture, and the like, which cannot be implemented by solely mechanical means. Further, projections may be utilized to more easily provide features which may otherwise be provided by mechanical means, such as fine facial movements (e.g., eyebrow movements, eye movements, fine movements of the mouth, and the like). Such addition of features through projection is often difficult due to the complexity of aligning such projections with features of the animatronic. For example, projecting onto animatronics is difficult due to dynamic shapes with changing topology. Projections can appear warped, misplaced, or otherwise unrealistic due to movement of an animatronic where the projections are not rendered for the specific movements of the animatronic. For example, shadows projected onto an animatronic may appear in the correct location before movement of the animatronic, but may not move with the animatronic, resulting in an unrealistic appearance of the animatronic.

Further, development of animatronic figures for particular characters is often a long and expensive process. Types of data used to design and operate animatronics are generally different than the types of data used by animators to animate characters. Conversion of such data is often time consuming and expensive and can require frequent back and forth between developers of animatronic systems and animators.

The systems and methods described herein may allow for use of projections in conjunction with mechanical movements to create high fidelity animatronic figures. For example, projections may be used to provide additional details (e.g., the appearance of bloodflow, shadows, and the like) that cannot be provided by solely mechanical means and which increase fidelity of animatronic figures. Such details are properly aligned to animatronic figures and synchronized to movements of the animatronic figures using automatic calibration between projectors and animatronic figures and real-time dynamic rendering of projected content. Because the content is dynamically rendered in real-time or near real-time, the projected content can be rendered based on the actual positioning of the projector and the animatronic figure, as well as on environmental conditions around the animatronic (e.g., light levels, sound levels, humidity, and the like). Dynamic rendering further allows for creation of high fidelity interactive animatronic figures.

The systems and methods described herein further reduce the time and cost associated with development of animatronic figures. For example, rendering engines, such as gaming engines, may utilize similar data types as those utilized by animators, reducing time and expenses needed to convert between data types. Similarly, design systems described herein may use similar data types in the design of animatronics. Further, the methods of projection described herein allow for simpler mechanical systems in animatronics. Such systems may utilize off-the-shelf parts rather than custom parts, reducing development costs and costs to construct such animatronics. Also, the design process for simpler mechanical systems is generally shorter. Accordingly, the utilization of the systems and methods described herein can improve the development process for animatronic figures, leading to faster deployment of new animatronics and reduced costs associated with development of such animatronics.

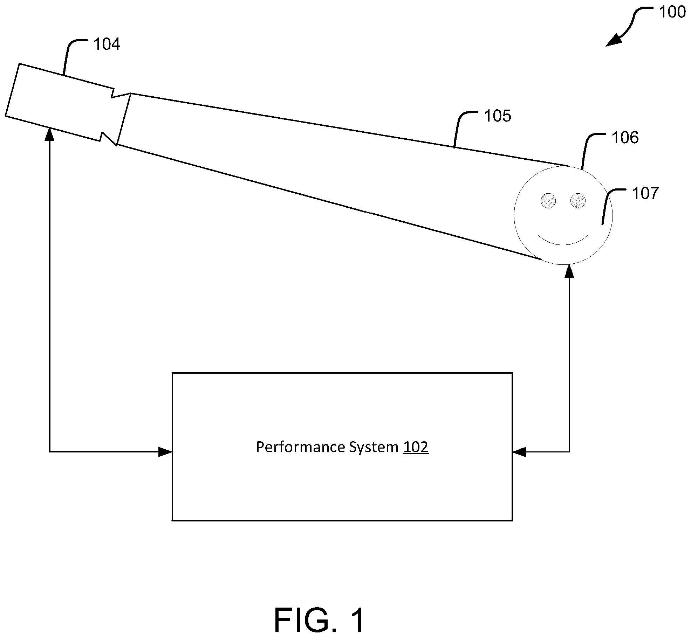

FIG. 1 illustrates a performance system 102 in communication with a projector 104 and an animatronic 106 including a mechanically animated surface 107. Generally, the performance system 102 communicates with the projector 104 and the animatronic 106 to project content onto the mechanically animated surface 107 to enhance the appearance of the mechanically animated surface 107. The performance system 102 may render the content in real-time based on, for example, positioning of the mechanically animated surface 107 relative to the projector 104.

The animatronic 106 may comprise an animatronic object, character, or the like. The mechanically animated surface 107 may be incorporated into the animatronic 106 such that the mechanically animated surface 107 moves responsive to actuation of motors of the animatronic 106. In such examples, the mechanically animated surface 107 may form the surface of such an animatronic 106. For example, the mechanically animated surface 107 may be shaped to match a particular portion of the animatronic 106. In various examples, the mechanically animated surface 107 may be a vacuum formed material, such as thermoplastics, silicone, rubber, plastics, alloys, or the like, shaped or formed into a face form. However, many other shapes and forms of the mechanically animated surface 107 may be used. In some examples, the mechanically animated surface 107 may further be textured, varied in color, or the like, and the projected content 105 may be adjusted to compensate for such features of the mechanically animated surface 107.

The projector 104 generally projects content 105 (e.g., images, video, or the like) onto the mechanically animated surface 107. The projector 104 may be substantially any type of image device or spatial light modulator configured to project light onto the mechanically animated surface 107. In various examples, multiple projectors may be utilized to project content 105 onto a mechanically animated surface 107 of an animatronic 106.

The performance system 102 generally renders content 105 to be projected by the projector 104 onto the mechanically animated surface 107. The performance system 102 further communicates with the projector 104 and control systems associated with the mechanically animated surface 107. For example, the performance system 102 may communicate with the projector 104 to provide content to be projected onto the mechanically animated surface 107. In various examples, the performance system 102 may further provide various commands to the projector 104 to, for example, adjust positioning, field of view, focus, and/or other characteristics of the projector 104. The performance system 102 may further communicate with control systems associated with the animatronic 106 to actuate one or more motors of the animatronic 106, causing movement of the mechanically animated surface 107.

Through communication with the projector 104 and the control systems associated with the animatronic 106, the performance system 102 may coordinate the projected content 105 with movements of the mechanically animated surface 107. For example, the animatronic 106 and/or movement of the mechanically animated surface 107 may be determined based on content to be projected onto the mechanically animated surface 107, such that the motions of the mechanically animated surface 107 are driven by the content to be projected onto the mechanically animated surface 107. The performance system 102 may render projected content 105 by modifying such content based on input from various sensors associated with the animatronic 106 and/or the mechanically animated surface 107. For example, content may be modified (e.g., warped, stretched, colored, or the like) to compensate for the shape and movement of the mechanically animated surface 107. Further, the performance system 102 may render the projected content 105 to coordinate with particular motions of the mechanically animated surface 107, such that the projected content 105 is synchronized to motions of the mechanically animated surface 107. In some examples, projected content 105 projected by the projector 104 and/or motions of the mechanically animated surface 107 may be adjusted based on parameters such as input from various sensors, positioning of the mechanically animated surface 107 relative to the projector 104, and the like. Accordingly, the projected content 105 may remain coordinated with the movements of the mechanically animated surface 107 in changing conditions.

In various examples, the performance system 102 may include or utilize one or more hosts or combinations of compute resources which may located, for example, at one or more servers, cloud computing platforms, computing clusters, and the like. Generally, the performance system 102 is implemented by compute resources including hardware for memory and one or more processors. For example, the performance system 102 may utilize or include one or more processors, such as a CPU, GPU, and/or programmable or configurable logic.

In some embodiments, various components of the performance system 102 may be distributed across various computing resources, such that the components of the performance system 102 communicate with one another through a network and/or other communications protocols. For example, in some examples, one or more components of the performance system 102 may be implemented as a serverless service, where computing resources for various components of the performance system 102 may be located across various computing environments (e.g., cloud platforms) and may be reallocated dynamically and/or automatically according to, for example, resource usage of the performance system 102. In various implementations, the performance system 102 may be implemented using organizational processing constructs such as functions implemented by worker elements allocated with compute resources, containers, virtual machines, and the like.

In various examples, the components shown in FIG. 1 may communicate over various networks using wired and/or wireless communications protocols. For example, the performance system 102 may be remote from the projector 104 and the animatronic 106 and may communicate with the projector 104 and the animatronic 106 using one or more wireless communication protocols. In some examples, the performance system 102 may communicate with the projector 104 and/or the animatronic 106 via wired communication protocols. The performance system 102 may include one or several components integrated into or local to the projector 104 or the animatronic 106.

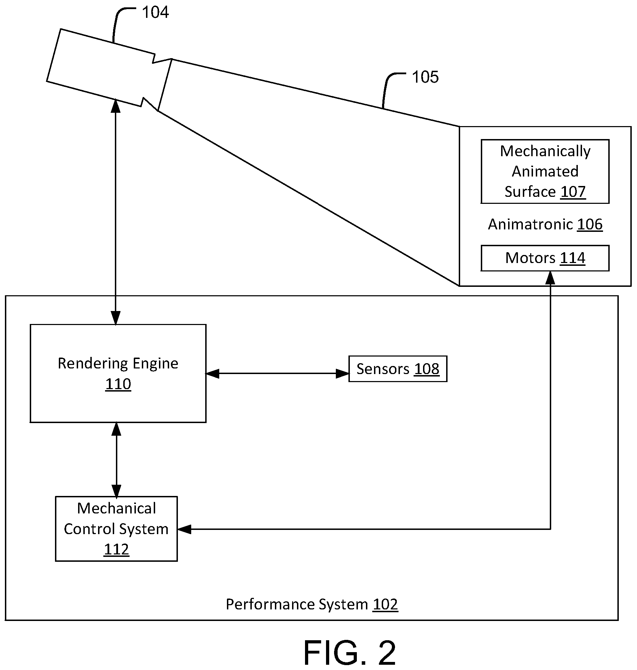

FIG. 2 illustrates a schematic diagram of the performance system 102 in communication with the projector 104 and the animatronic 106. Generally, the performance system 102 includes a rendering engine 110 in communication with various sensors 108 and a mechanical control system 112. The rendering engine 110 communicates with the projector 104 and the mechanical control system 112 to present content using the projector 104 and provide commands for movements of the animatronic 106. In various examples, the rendering engine 110 may utilize input from the sensors 108 to for the real-time rendering of content 105 and movements of the mechanically animated surface 107.

Rendering engine 110 may be implemented by various computing resources of the performance system 102. The rendering engine 110 is generally configured to render content in real-time. For example, the rendering engine 110 may be a gaming engine, such as a UNREAL engine or other similar gaming engines. Real-time rendering may generally provide the ability to update and/or alter content responsive to changes in the animatronic 106, the environment surrounding the animatronic 106, position of the projector 104 relative to the animatronic 106, and the like. Further, real-time rendering by the rendering engine 110 may allow for projection of content onto the mechanically animated surface 107 by providing content 105 aligned to the mechanically animated surface 107 based on actual relative positioning of the projector 104 and the animatronic 106. In some examples, where multiple projectors are utilized to project content onto the mechanically animated surface 107, such real-time rendering may further allow for blending of the content 105 between the two projectors (e.g., modifying the content based on overlap between two projectors to account for the overlap regions to avoid areas of different color or brightness).

Animatronic sensors 108 generally provide feedback to the rendering engine 110, providing input for the rendering engine 110 to render content to be projected by the projector 104 onto the mechanically animated surface 107 of the animatronic 106. Such feedback allows for dynamic rendering of content by the rendering engine 110 such that projected content correctly aligns with the mechanically animated surface 107. For example, the sensors 108 allow for continuous tracking of movements of the mechanically animated surface 107 and the location of the mechanically animated surface 107 relative to the projector 104. Input from the sensors 108 may then be utilized by the rendering engine 110 in dynamic rendering of content projected onto the mechanically animated surface 107.

The sensors 108 may include various types of sensors, such as cameras, microphones, infrared sensors, touch interfaces, buttons, temperature sensors, light sensors, and the like. The sensors 108 are generally animatronic sensors associated with the animatronic 106. That is, the sensors 108 may monitor the environment of the animatronic 106, orientation or location of the animatronic 106, orientation or location of the mechanically animated surface 107 of the animatronic 106, location of the projector 104 relative to the animatronic 106, and the like. For example, a light sensor may monitor ambient light in the environment of the animatronic 106. Audio sensors (e.g., microphones) may monitor sounds around the animatronic 106, including, in various examples, levels of ambient noise and/or other types of audio input, such as speech, in the environment of the animatronic 106. Cameras may be utilized to visually locate the animatronic 106, the mechanically animated surface 107, and the projector 104.

The mechanical control system 112 generally communicates with motors 114 of the animatronic to actuate the motors 114 and move the mechanically animated surface 107 of the animatronic 106. The mechanical control system 112 may generally translate commands or data provided by the rendering engine 110 to commands configured for the motors 114 of the animatronic. For example, the rendering engine 110 may send animation data to the mechanical control system 112 using user datagram protocol (UDP) packets, or other types of data transfer protocols. Upon receiving the animation data, the mechanical control system 112 translates the animation data to motor data for the motors 114. Such motor data may include which motors to move, direction of motion, speed of motion, and the like.

In various examples, the mechanical control system 112 may further track or monitor the actuation of the motors 114 and provide such information to the rendering engine 110 for use in rendering content 105. For example, relative positions of motors 114 of the animatronic may be useful to determine the topography of the mechanically animated surface 107, which may be utilized by the rendering engine 110 to render the content 105 to match the topography of the mechanically animated surface 107.

Though the performance system 102 is shown including one rendering engine 110, in various examples, the performance system 102 includes multiple rendering engines. For example, where multiple projectors are utilized to project content 105, a rendering engine may be utilized for each of the multiple projectors. In such examples, the rendering engines may communicate with one another to coordinate the presentation of content 105 across the projectors. For example, different projectors may be configured to project onto particular regions of the mechanically animated surface 107, and the rendering engines may communicate to provide for proper blending of the content projected on the mechanically animated surface 107 as a whole.

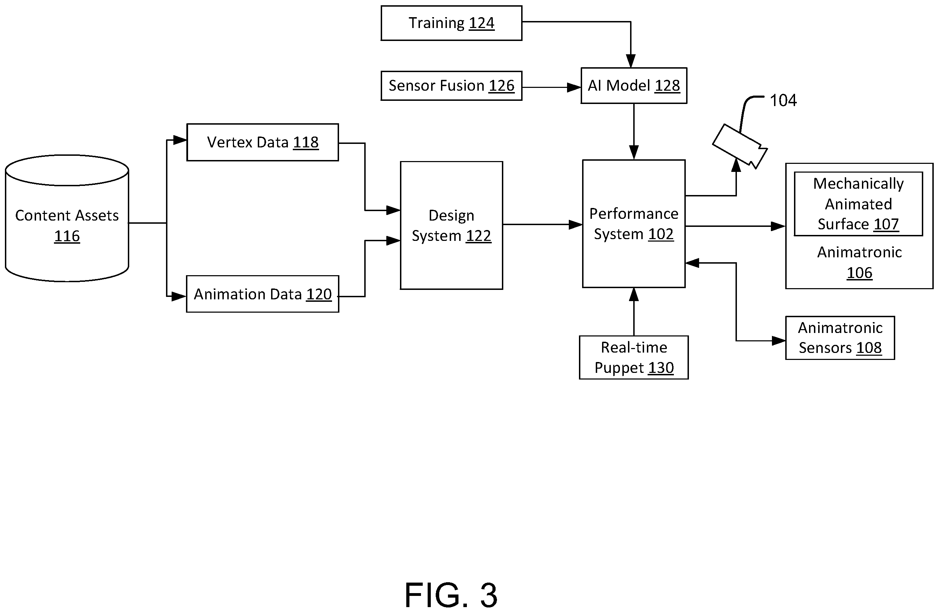

FIG. 3 illustrates a schematic diagram of additional components in communication with the performance system 102. The schematic diagram shows various components utilized to generate content for display and present content using an animatronic 106 and projector 104. For example, content assets 116, including both vertex data 118 and animation data 120, may be provided to a design system 122 to design the animatronic 106 and/or content to be projected onto the animatronic 106 by a projector 104. The design system 114 may communicate information about the design of the animatronic 106 (e.g., location of features, textures, dimensions, and other characteristics of the animatronic 106) along with the vertex data 116 and the animation data 120 to the performance system 102. The performance system 102 may utilize such data to determine initial movements for the animatronic 106 and the mechanically animated surface 107 based on the content to be projected onto the mechanically animated surface 107. The performance system 102 may further utilize such data, along with input from animatronic sensors 108 and, in some examples, input from an AI model 128 and/or a real-time puppet 130 to render the content for projection onto the mechanically animated surface 107 of the animatronic 106. In some examples, the performance system 102 may further use such input to determine additional movements for the animatronic 106 and mechanically animated surface 107 to be synchronized with the projection of the content 105.

Content assets 116 may be, for example, information about individual characters or other elements to be portrayed using the animatronic 106. Content assets 116 may generally be stored at one or more data stores. Such data stores may be associated with, for example, animation studios, gaming studios, or other creators of content assets 116. Individual content assets 116 may include vertex data 118 and animation data 120. Both types of data may be utilized by the design system 122 and the performance system 102 to render content for presentation using the projector 104 and the animatronic 106. Generally, vertex data 118 is mesh data for a particular character, while animation data 120 is data related to how to move the mesh to animate the character. In various examples, the design system 122 utilizes vertex data 118 and animation data 120 for a character to design the animatronic 106 of the character. For example, the design system 122 may extrapolate from the vertex data 118 to generate a shape for the mesh of the animatronic by performing a strain analysis on the mesh of the vertex data 118 to determine protruding points in the mesh. A shape may then be extrapolated or synthesized from the protruding points. In some examples, the design system 122 may further be used to create baseline content for rendering by the performance system 102. For example, the design system 122 may be used to generate content or instructions for content, which may be rendered by the performance system 102. The design system 122 may further determine characteristics of the animatronic 106 and/or the mechanically animated surface 107 based on such baseline content. For example, the animatronic 106 may be designed to conform to the vertex data 118 and initial movements of the mechanically animated surface 107 may be determined based on the animation data 120 and/or the baseline content.

The performance system 102 may receive information about the animatronic 106 and projections from the design system 122. The performance system 102 may determine initial movements of the animatronic 106 based on characteristics of the content to be projected onto the animatronic 106. In various examples, either before content is rendered or as initial content is projected onto the animatronic 106, the performance system 102 may receive additional input to render content for the projector 104 and/or to generate movements for the animatronic 106. For example, an artificial intelligence (AI) model 128 may be utilized by the performance system 102 to render projected content and movements of the animatronic 106. In some examples, a real-time puppet 130 may also provide feedback to the performance system 102 to allow user interaction with the animatronic 106.

The AI model 128 may generally provide information to the performance system 102 regarding how to adjust rendered content 105 given particular input from sensors. For example, the AI model 128 may be an unsupervised learning model trained using synthetic or real-life training data 124 regarding sensor input and rendering of projected content based on sensor inputs. In some examples, the AI model 128 may be further trained using sensor fusion data, such that the performance system 102 may more accurately utilize input from multiple animatronic sensors and multiple types of animatronic sensors at one time. In some examples, the AI model 128 may be further configured to identify and parse speech, gestures, and other interactions with the animatronic 106. For example, a microphone in the environment of the animatronic 106 may return input including speech and the AI model 128 may parse the speech from the input to identify questions, commands, and the like. Similarly, visual sensors (e.g., cameras) in the environment of the animatronic 106 may provide visual input including user interactions with the animatronic 106 and the AI model 128 may parse defined actions from the user movements.

The real-time puppet 130 may be a computing system, model, or human operated system allowing the animatronic 106 to interact with users in real-time. For example, sensors of the performance system 102 may identify speech from a user asking a question to the animatronic 106. The real-time puppet 130 may identify a proper response to the user's question. In another example, sensors of the performance system 102 may identify gestures from a user giving particular commands to or otherwise interacting with the animatronic. The real-time puppet 130 may identify a proper response to identified gestures. For example, the real-time puppet 130 may include a large language model (LLM) or other model configured to generate appropriate answers to user questions, and the real-time puppet 130 may provide the answer to the performance system 102. Similarly, a human user may provide an answer to user questions using the real-time puppet 130. Such answers may be provided to the performance system 102, which may render content 105 and motions for the animatronic 106 such that the animatronic 106 appears to be answering the user's question.

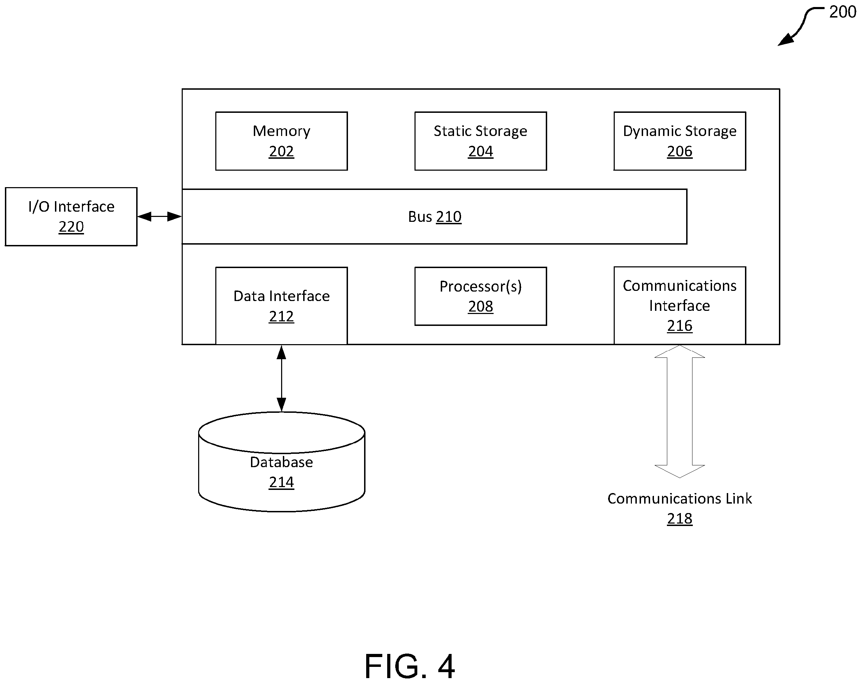

FIG. 4 illustrates an example computing system 200 that may be used for implementing various embodiments in the examples described herein. For example, in various embodiments, components of the performance system 102, design system 122, AI model 128, and/or other components may be implemented by one or several computing systems 200. For example, the rendering engine 110 and the mechanical control system 112 may include or be implemented by a computing system 200. This disclosure contemplates any suitable number of computing systems 200. For example, the computing system 200 may be a server, a desktop computing system, a mainframe, a mesh of computing systems, a laptop or notebook computing system, a tablet computing system, an embedded computer system, a system-on-chip, a singleboard computing system, or a combination of two or more of these. Where appropriate, the computing system 200 may include one or more computing systems; be unitary or distributed; span multiple locations; span multiple machines; span multiple data centers; or reside in a cloud, which may include one or more cloud components in one or more networks.

Computing system 200 includes a bus 210 (e.g., an address bus and a data bus) or other communication mechanism for communicating information, which interconnects subsystems and devices, such as processor 208, memory 202 (e.g., RAM), static storage 204 (e.g., ROM), dynamic storage 206 (e.g., magnetic or optical), communications interface 216 (e.g., modem, Ethernet card, a network interface controller (NIC) or network adapter for communicating with an Ethernet or other wire-based network, a wireless NIC (WNIC) or wireless adapter for communicating with a wireless network, such as a WI-FI network), input/output (I/O) interface 220 (e.g., keyboard, keypad, mouse, microphone). In particular embodiments, the computing system 200 may include one or more of any such components.

In particular embodiments, processor 208 includes hardware for executing instructions, such as those making up a computer program. For example, a processor 208 may execute instructions for various components of a performance system. The processor 208 circuity includes circuitry for performing various processing functions, such as executing specific software for performing specific calculations or tasks. In particular embodiments, I/O interface 220 includes hardware, software, or both, providing one or more interfaces for communication between computing system 200 and one or more I/O devices. Computing system 200 may include one or more of these I/O devices, where appropriate. One or more of these I/O devices may enable communication between a person and computing system 200.

In particular embodiments, the communications interface 216 includes hardware, software, or both providing one or more interfaces for communication (such as, for example, packet-based communication) between computing system 200 and one or more other computer systems or one or more networks. One or more memory buses (which may each include an address bus and a data bus) may couple processor 208 to memory 202. Bus 210 may include one or more memory buses, as described below. In particular embodiments, one or more memory management units (MMUs) reside between processor 208 and memory 202 and facilitate accesses to memory 202 requested by processor 208. In particular embodiments, bus 210 includes hardware, software, or both coupling components of computing system 200 to each other.

According to particular embodiments, computing system 200 performs specific operations by processor 208 executing one or more sequences of one or more instructions contained in memory 202. For example, instructions for various components of the performance system 102 may be contained in memory 202 and may be executed by the processor 208. Such instructions may be read into memory 202 from another computer readable/usable medium, such as static storage 204 or dynamic storage 206. In alternative embodiments, hard-wired circuitry may be used in place of or in combination with software instructions. Thus, particular embodiments are not limited to any specific combination of hardware circuitry and/or software. In various embodiments, the term "logic" means any combination of software or hardware that is used to implement all or part of particular embodiments disclosed herein.

The term "computer readable medium" or "computer usable medium" as used herein refers to any medium that participates in providing instructions to processor 208 for execution. Such a medium may take many forms, including but not limited to, nonvolatile media and volatile media. Non-volatile media includes, for example, optical or magnetic disks, such as static storage 204 or dynamic storage 206. Volatile media includes dynamic memory, such as memory 202.

Computing system 200 may transmit and receive messages, data, and instructions, including program, e.g., application code, through communications link 218 and communications interface 216. Received program code may be executed by processor 208 as it is received, and/or stored in static storage 204 or dynamic storage 206, or other storage for later execution. A database 214 may be used to store data accessible by the computing system 200 by way of data interface 212. For example, projection settings, content, vertex data, animation data, and the like may be stored using a database 214. In various examples, a communications link 218 at the performance system 102 may communicate with projector 104, animatronic 106, and/or other computing components within a network.

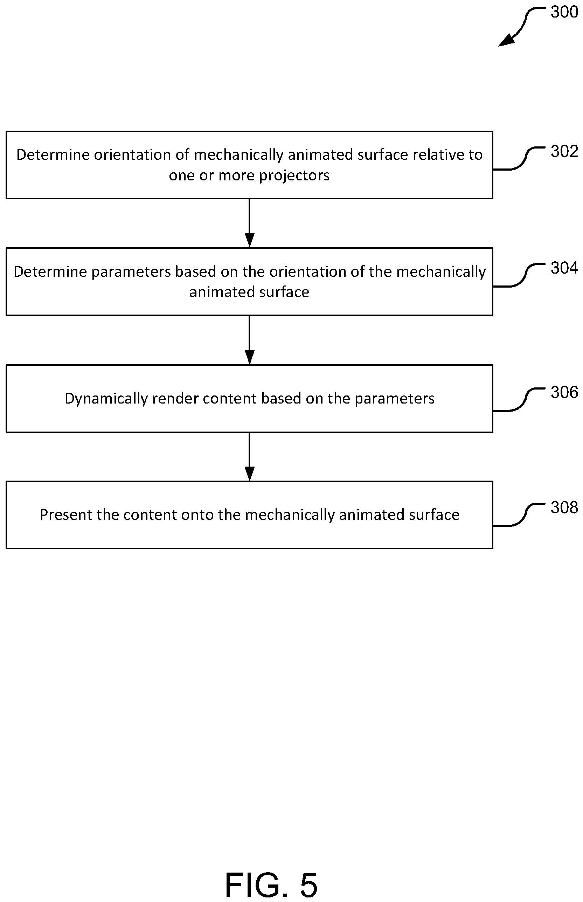

FIG. 5 illustrates a process 300 of projecting content onto a mechanically animated surface 107 of an animatronic 106. The process 300 generally includes calibration of the projector 104 and the mechanically animated surface 107 of the animatronic 106. Such calibration allows for projected content 105 to be properly aligned with the mechanically animated surface 107, improving the appearance of the animatronic 106 and fidelity of the content 105 presented by the projector 104 in conjunction with movements of the animatronic 106. For example, the projector 104 may be configured to project forehead wrinkles onto the mechanically animated surface 107 as the mechanically animated surface 107 moves while a character is speaking. Without calibration between the projector 104 and the mechanically animated surface 107, the wrinkles may appear at an unnatural location on the animatronic 106. Using the method 300, such features are projected onto the correct locations on the animatronic 106, increasing fidelity and improving a realistic appearance of the animatronic 106.

The calibration described in the process 300 may occur before content is projected onto the mechanically animated surface 107 of the animatronic 106. In some examples, such calibration may also or alternatively occur as content is projected onto the mechanically animated surface 107 of the animatronic 106. In such examples, initial movements of the animatronic 106 may be determined by the performance system 102 based on the initial content being projected onto or to be projected onto the mechanically animated surface 107 of the animatronic 106.

At block 302, the performance system 102 determines an orientation of the mechanically animated surface 107 relative to one or more projectors 104. The orientation may be determined using various sensors 108 associated with the animatronic 106 and/or the environment of the animatronic 106. In various examples, the sensors 108 may include visual sensors obtaining visual feedback on the positions of the animatronic 106 and the projector 104. For example, during a calibration step, the projector 104 may project a grid, reference points, or other calibration images onto the mechanically animated surface 107. Visual sensors (e.g., cameras) may then utilize the locations of the grid or other reference points on the mechanically animated surface 107 to obtain positional information for the mechanically animated surface 107 and positional information for the projector 104 relative to the mechanically animated surface 107. In some examples, the sensors 108 may further include sensors obtaining positional data for motors of the animatronic 106. For example, positional information for the motors 114 of the animatronic may be received from the mechanical control system 112 and may be utilized to help determine the position of portions or all of the mechanically animated surface 107. Such additional positional data may be used in addition to positional data from projections to determine the orientation of the projector 104 relative to the mechanically animated surface 107.

The positional data for the mechanically animated surface 107 and the positional data for the projector 104 are generally provided to the performance system 102 to determine the orientation of the projector 104 relative to the mechanically animated surface 107. In various examples, the orientation may include orientations of a known point of the projector 104 relative to various markers on the mechanically animated surface 107. Generally, the orientation of the projector 104 relative to the mechanically animated surface 107 is provided to the rendering engine 110 to render content based on the orientation or orientations.

In some examples, where multiple projectors are used to project content 105 onto a mechanically animated surface 107, the performance system 102 may determine an orientation of each of the projectors relative to the mechanically animated surface 107 and, in some examples, orientations of the projectors relative to one another. Similarly, where the projector 104 (or multiple projectors) project content onto multiple mechanically animated surfaces, the performance system 102 may determine an orientation of each mechanically animated surface to a relevant projector or projectors.

The performance system 102 determines parameters based on the orientation of the mechanically animated surface 107 at block 304. The parameters may generally be utilized by the rendering engine 110 to render the content for presentation using the projector 104 and the mechanically animated surface 107. In various examples, parameters may be characteristics of the projector 104 and/or the projection 105 which may be affected by the orientation between the projector 104 and the mechanically animated surface 107. Parameters may include, in various examples, an angle of the projection, a ratio of the projection, and an intensity of the projection.

The performance system 102 generally determines such parameters based on the orientation of the mechanically animated surface 107 relative to the projector 104. For example, the rendering engine 110 may determine the correct angle of projection such that elements of the content 105 correctly align with features of the mechanically animated surface 107 when the content 105 is projected onto the mechanically animated surface 107. The rendering engine 110 may similarly determine a ratio of the content 105 to be projected such that the content 105 is correctly scaled when projected onto the mechanically animated surface 107. The performance system 102 may further determine intensity of the content 105 to be projected based on the orientation of the mechanically animated surface 107 relative to the projector 104. For example, a higher intensity may be used where the mechanically animated surface 107 is further from the projector to maintain the appearance (e.g., coloring, opacity, and the like) of the content 105 when projected onto the mechanically animated surface 107.

In some examples, the rendering engine 110 may utilize the AI model 128 to determine parameters. For example, the rendering engine 110 may provide orientation information and/or input from sensors 108 to the AI model 128 and the AI model 128 may return a set of parameters based on the orientation information. In some examples, the rendering engine 110 may provide input from additional sensors to the AI model 128 along with the positional information. For example, the rendering engine 110 may provide the orientation of the projector 104 relative to the mechanically animated surface 107 along with input from a sensor detecting ambient light in the environment of the animatronic 106 to the AI model 128. Accordingly, the AI model 128 may generate a set of parameters taking into account both the orientation of the projector 104 relative to the mechanically animated surface 107 and the ambient light levels surrounding the animatronic 106.

At block 306, the performance system 102 dynamically renders content 105 based on the parameters. The rendering engine 110 generally renders the content 105 based on the determined parameters. Dynamic rendering of content includes rendering of frames of the content 105 in real-time or near real-time, such that the performance system 102 may adjust the display of the content 105 and/or the content 105 itself based on conditions of the projector 104, the animatronic 106, conditions of the environment of the projector 104 or the animatronic 106, and the like. In some examples, the rendering engine 110 may further determine adjustments to the angle or other settings of the projector 104, movements of the mechanically animated surface 107, and the like. Further, where multiple projectors are utilized to project content 105 onto the mechanically animated surface 107, the rendering engine may render the content 105 such that the content 105 is correctly blended between the multiple projectors.

The performance system 102 presents the content 105 onto the mechanically animated surface 107 at block 308. Generally, the projector 104 projects the content 105 onto the mechanically animated surface 107, and such content 105 is synchronized to movements of the mechanically animated surface 107. After dynamically rendering the content 105 at block 406, the rendering engine 110 communicates with the projector 104 to provide the content 105 to the projector 104 for projection onto the mechanically animated surface 107. In some examples, the rendering engine 110 may provide content 105 to the projector 104 by continuously streaming a next frame of the content 105 to the projector 104 for presentation. Additionally or alternatively, the rendering engine 110 may provide larger blocks or portions of the content 105 to the projector 104 for presentation.

The rendering engine 110 may further communicate movements of the mechanically animated surface 107 to a mechanical control system 112 of the performance system. Such movements may, in various examples, include actuations for motors 114 of the animatronic 106, where such actuations move the mechanically animated surface 107. Such movements may be generated based on animation data for the character of the animatronic 106. To synchronize the movements to the projection of content 105 onto the mechanically animated surface 107, such movements may further include timing for the actuations, such as using time stamps synchronized to projection of the content 105. Generally, the mechanical control system 112 may translate such movements to particular actuation commands for individual motors of the motors 114.

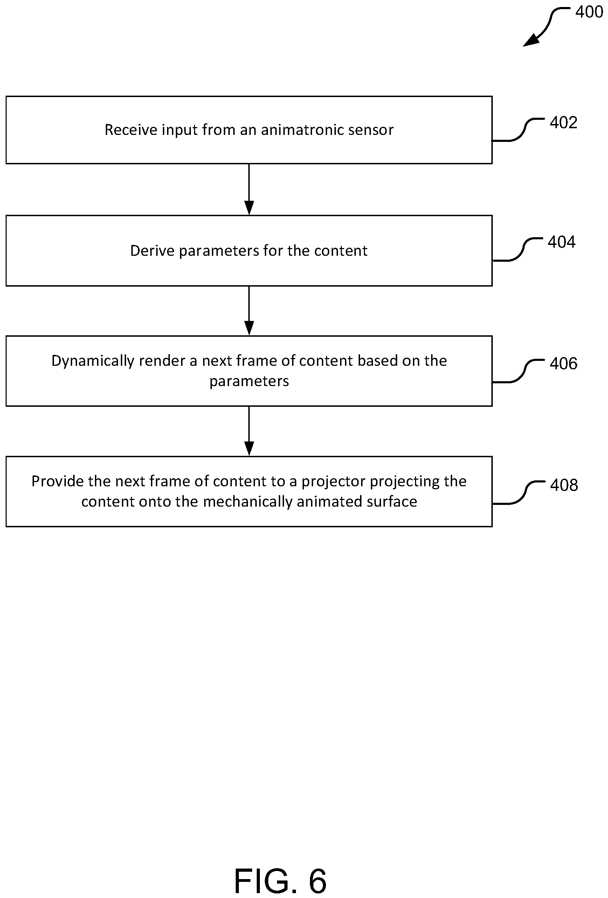

FIG. 6 illustrates a process 400 of adjusting the projection of content onto a mechanically animated surface 107 based on sensor input. The process 400 may generally allow the performance system 102 to adjust the content 105 dynamically and automatically responsive to changes in the environment of the animatronic 106, such as, for example, changing light or sound levels. Such adjustments may help to maintain the high fidelity of the animatronic 106 when the content 105 is projected onto the animatronic. The process 400 may further be utilized to provide high fidelity interactive animatronics. For example, the content 105 may be adjusted or dynamically rendered to respond to speech, movements, or other conditions detected in the environment of the animatronic 106.

In some examples, the process 400 may further be utilized to dynamically respond to changes to the orientation of the mechanically animated surface 107 relative to the projector 104. For example, the orientation of the mechanically animated surface 107 relative to the projector 104 may change as the content 105 is projected onto the mechanically animated surface 107 through movements of the projector 104 or animatronic 106, guests accidentally bumping into the animatronic 106, and the like. Using the process 400, the dynamic rendering engine 110 may adjust the content 105 to dynamically respond to such changes, such that the projector 104 and the animatronic 106 do not need to be recalibrated responsive to changes in the orientation, allowing the animatronic 106 to operate continuously.

At block 402, the performance system 102 receives input from an animatronic sensor 108. The sensor input may generally be received by the performance system 102 (e.g., the rendering engine 110) from the animatronic sensors 108. In various examples, such sensor input may include audio input, visual input, and/or tactile input (e.g., through a touch screen, button, or the like). For example, the animatronic sensors 108 may include one or more microphones receiving audio input to, for example, measure noise levels or pick up speech in the environment of the animatronic 106. In some examples, animatronic sensors 108 may include light sensors providing input regarding lighting levels in the environment of the animatronic 106. Where the animatronic sensors 108 include a camera, the rendering engine 110 may receive a video stream, still images, or other input from the camera.

The rendering engine 110 may continuously receive input from animatronic sensors 108. In such examples, the rendering engine 110 may monitor such input for changes to previous or baseline sensor input. For example, input from a camera may be used to determine an orientation of the mechanically animated surface 107 relative to the projector 104 and may monitor the input for any change to the orientation. In some examples, the rendering engine 110 or other components of the performance system 102 may continuously receive visual input or audio input and may monitor such input for attempted interactions with the animatronic 106. For example, the performance system 102 may analyze video input to detect people in the frame, defined gestures in the frame, or the like. Similarly, the performance system 102 may analyze audio input for speech other than background noise to detect commands, questions, or other input from users attempting to interact with the animatronic 106.

The performance system 102 derives parameters for the content 105 from the sensor input at block 404. In various examples, such parameters may be derived from an orientation of the mechanically animated surface 107 relative to the projector 104, where the orientation is derived from the sensor input. Parameters may be derived, additionally or alternatively, from other types of animatronic sensors 108. For example, a light sensor may be utilized to derive parameters for brightness of the projection or projections.

In various examples, the parameters may further be derived using input from an AI model 128. In some examples, the performance system 102 may provide a single sensor input to the AI model 128, and the AI model 128 may return a corresponding parameter or set of parameters based on the sensor input. For example, the performance system 102 may provide an ambient light measurement to the AI model 128 and the AI model 128 may return a brightness parameter for the projected content 105. In some examples, the performance system 102 may provide multiple sensor inputs to the AI model 128, and the AI model 128 may return a set of parameters based on the input. For example, the performance system 102 may provide an ambient light measurement and an orientation of the projector 104 relative to the mechanically animated surface 107. Using both inputs, the AI model 128 may return a brightness parameter, and a projection ratio parameter. Such parameters may be more accurate where the AI model 128 is trained using sensor fusion 126. For example, a brightness parameter may be more accurate when taking into account both ambient light and the orientation of the projector 104 relative to the mechanically animated surface, when contrasted with a brightness parameter based only on an ambient light measurement.

In some examples, parameters may be interactive parameters. For example, interactive parameters may be identification of speech, tactile input, gestures, and the like. In some examples, such parameters may be identified speech (e.g., the words spoken by a user interacting with the animatronic 106), identified gestures (e.g., a "thumbs up" gesture identified in video input), and the like. Such parameters may, in various examples, be identified using the AI model 128. For example, the AI model 128 or another AI model in communication with the performance system 102 may be configured to process audio input, visual input, or other types of input to identify speech, gestures, and the like. Some such parameters may be derived using defined inputs. For example, where the input is selection of a particular button by a user, the corresponding parameter may be an option associated with selection of the button.

At block 406, the performance system 102 dynamically renders a next frame of content based on the parameters. In some examples, the next frame of content may be dynamically rendered by adjusting a next frame of content 105 already being projected by the projector 104 to increase fidelity of the content 105 based on environmental parameters of the animatronic 106. For example, the rendering engine 110 may render a next frame of content 105 based on a brightness parameter derived from one or more sensor inputs.

In some examples, the next frame of content may be newly rendered and/or selected based on interactive parameters. In such examples, the real-time puppet 130 may receive one or more interactive parameters and may select a next frame of content. The next frame of content may be provided to the rendering engine 110 to be rendered and communicated to the projector 104.

In some examples, the performance system 102 may further dynamically render or determine movements for the animatronic 106 such that movements of the mechanically animated surface 107 are synchronized to the content 105 projected onto the mechanically animated surface 107.

The performance system 102 provides the next frame of content to a projector 104 projecting the content onto the mechanically animated surface 107 at block 408. Generally, the rendering engine 110 communicates with the projector 104 to provide the next frame of content 105 to the projector 104 for projection onto the mechanically animated surface 107. The rendering engine 110 may further communicate movements of the mechanically animated surface 107 to the mechanical control system 112. Such movements may, in various examples, include actuations for the motors 114 of the animatronic 106, where such actuations move the mechanically animated surface 107.

The description of certain embodiments included herein is merely exemplary in nature and is in no way intended to limit the scope of the disclosure or its applications or uses. In the included detailed description of embodiments of the present systems and methods, reference is made to the accompanying drawings which form a part hereof, and which are shown by way of illustration specific to embodiments in which the described systems and methods may be practiced. These embodiments are described in sufficient detail to enable those skilled in the art to practice presently disclosed systems and methods, and it is to be understood that other embodiments may be utilized, and that structural and logical changes may be made without departing from the spirit and scope of the disclosure. Moreover, for the purpose of clarity, detailed descriptions of certain features will not be discussed when they would be apparent to those with skill in the art so as not to obscure the description of embodiments of the disclosure. The included detailed description is therefore not to be taken in a limiting sense, and the scope of the disclosure is defined only by the appended claims.

From the foregoing it will be appreciated that, although specific embodiments of the invention have been described herein for purposes of illustration, various modifications may be made without deviating from the spirit and scope of the invention.

The particulars shown herein are by way of example and for purposes of illustrative discussion of the preferred embodiments of the present invention only and are presented in the cause of providing what is believed to be the most useful and readily understood description of the principles and conceptual aspects of various embodiments of the invention. In this regard, no attempt is made to show structural details of the invention in more detail than is necessary for the fundamental understanding of the invention, the description taken with the drawings and/or examples making apparent to those skilled in the art how the several forms of the invention may be embodied in practice.

As used herein and unless otherwise indicated, the terms "a" and "an" are taken to mean "one", "at least one" or "one or more". Unless otherwise required by context, singular terms used herein shall include pluralities and plural terms shall include the singular.

Unless the context clearly requires otherwise, throughout the description and the claims, the words 'comprise', 'comprising', and the like are to be construed in an inclusive sense as opposed to an exclusive or exhaustive sense; that is to say, in the sense of "including, but not limited to". Words using the singular or plural number also include the plural and singular number, respectively. Additionally, the words "herein," "above," and "below" and words of similar import, when used in this application, shall refer to this application as a whole and not to any particular portions of the application.

Of course, it is to be appreciated that any one of the examples, embodiments or processes described herein may be combined with one or more other examples, embodiments and/or processes or be separated and/or performed amongst separate devices or device portions in accordance with the present systems, devices and methods.

Finally, the above discussion is intended to be merely illustrative of the present system and should not be construed as limiting the appended claims to any particular embodiment or group of embodiments. Thus, while the present system has been described in particular detail with reference to exemplary embodiments, it should also be appreciated that numerous modifications and alternative embodiments may be devised by those having ordinary skill in the art without departing from the broader and intended spirit and scope of the present system as set forth in the claims that follow. Accordingly, the specification and drawings are to be regarded in an illustrative manner and are not intended to limit the scope of the appended claims.

Aspects and features of the present disclosure are set out in the following numbered clauses.
1. A method comprising:
   determining an orientation of a mechanically animated surface relative to one or more projectors configured to project content onto the mechanically animated surface;
   dynamically rendering the content based on one or more parameters derived from the orientation of the mechanically animated surface relative to the one or more projectors; and
   presenting the content on the mechanically animated surface using the one or more projectors.
2. The method of clause 1, further comprising dynamically rendering one or more movements of the mechanically animated surface, wherein the movements of the mechanically animated surface are synchronized to the content.
3. The method of clause 2, further comprising directly controlling one or more motors configured to actuate the mechanically animated surface to cause the mechanically animated surface to make the one or more movements during the presentation of the content on the mechanically animated surface.
4. The method of clause 1, wherein the content is dynamically rendered using vertex data and animation data.
5. The method of clause 1, wherein the orientation of the mechanically animated surface relative to the one or more projectors is determined based on input from one or more animatronic sensors associated with the mechanically animated surface and the one or more projectors.
6. The method of clause 1, wherein the one or more parameters comprise one or more of an angle of the projection, a ratio of the projection and an intensity of the projection.
7. A method comprising:
   receiving input from at least one animatronic sensor associated with an animatronic, the animatronic including a mechanically animated surface;
   deriving positional information for the mechanically animated surface from the input;
   dynamically rendering a next frame of content projected onto the mechanically animated surface based on the positional information; and
   providing the next frame of content to at least one projector projecting the content onto the mechanically animated surface.
8. The method of clause 7, further comprising dynamically rendering one or more movements of the mechanically animated surface based on the positional information, wherein the movements of the mechanically animated surface are synchronized to the next frame of content.
9. The method of clause 8, further comprising providing the one or more movements of the mechanically animated surface to a control system of the animatronic.
10. The method of clause 7, wherein the next frame of content is dynamically rendered using vertex data and animation data.
11. The method of clause 7, wherein the at least one animatronic sensor is a camera.
12. The method of clause 7, further comprising receiving additional input from the sensor as the content is projected onto the mechanically animated surface.
13. The method of clause 7, wherein the next frame of content is dynamically rendered using a game engine.
14. A system comprising:
   one or more projectors;
   an animatronic comprising a mechanically animated surface; and
   a performance system in communication with the one or more projectors and the animatronic, the performance system being configured to dynamically render a projection of content from the one or more projectors onto the mechanically animated surface and one or more movements of the mechanically animated surface, wherein the projection is synchronized with the one or more movements of the mechanically animated surface.
15. The system of clause 14, wherein the performance system comprises a real-time rendering engine in communication with the projector and a mechanical control system of the animatronic.
16. The system of clause 14, wherein the performance system is further configured to determine the one or more movements of the mechanically animated surface.
17. The system of clause 14, wherein the performance system is further configured to determine an orientation of the mechanically animated surface relative to the one or more projectors, wherein the performance system is configured to dynamically render the projection based on the orientation of the mechanically animated surface relative to the one or more projectors.
18. The system of clause 14, wherein rendering the content comprises rendering the content to be presented by two or more projectors.
19. The system of clause 14, further comprising one or more animatronic sensors associated with the animatronic, wherein the performance system is further configured to derive positional information for the mechanically animated surface from input to the one or more animatronic sensors and dynamically render a next frame of the content based on the positional information.
20. The system of clause 19, wherein the performance system is further configured to provide the next frame of content to the one or more projectors.

## Claims

1. A method comprising:
determining an orientation of a mechanically animated surface relative to one or more projectors configured to project content onto the mechanically animated surface;
dynamically rendering the content based on one or more parameters derived from the orientation of the mechanically animated surface relative to the one or more projectors; and
presenting the content on the mechanically animated surface using the one or more projectors.

2. The method of claim 1, further comprising:
dynamically rendering one or more movements of the mechanically animated surface, wherein the movements of the mechanically animated surface are synchronized to the content; and
optionally, directly controlling one or more motors configured to actuate the mechanically animated surface to cause the mechanically animated surface to make the one or more movements during the presentation of the content on the mechanically animated surface.

3. The method of any preceding claim, wherein the content is dynamically rendered using vertex data and animation data.

4. The method of any preceding claim, wherein the orientation of the mechanically animated surface relative to the one or more projectors is determined based on input from one or more animatronic sensors associated with the mechanically animated surface and the one or more projectors.

5. The method of any preceding claim, wherein the one or more parameters comprise one or more of an angle of the projection, a ratio of the projection and an intensity of the projection.

6. A method comprising:
receiving input from at least one animatronic sensor associated with an animatronic, the animatronic including a mechanically animated surface;
deriving positional information for the mechanically animated surface from the input;
dynamically rendering a next frame of content projected onto the mechanically animated surface based on the positional information; and
providing the next frame of content to one or more projectors projecting the content onto the mechanically animated surface.

7. The method of claim 6, further comprising:
dynamically rendering one or more movements of the mechanically animated surface based on the positional information, wherein the movements of the mechanically animated surface are synchronized to the next frame of content; and
optionally, providing the one or more movements of the mechanically animated surface to a control system of the animatronic.

8. The method of any of claims 6 to 7, wherein the next frame of content is dynamically rendered using vertex data and animation data.

9. The method of any of claims 6 to 8, wherein the at least one animatronic sensor is a camera.

10. The method of any of claims 6 to 9, further comprising receiving additional input from the sensor as the content is projected onto the mechanically animated surface.

11. The method of any of claims 6 to 10, wherein the next frame of content is dynamically rendered using a game engine.

12. A method comprising:
dynamically rendering a projection of content from one or more projectors onto a mechanically animated surface of an animatronic and one or more movements of the mechanically animated surface, wherein the projection is synchronized with the one or more movements of the mechanically animated surface.

13. The method of claim 12, further comprising at least one of:
determining the one or more movements of the mechanically animated surface;
determining an orientation of the mechanically animated surface relative to the one or more projectors, wherein the projection is dynamically rendered based on the orientation of the mechanically animated surface relative to the one or more projectors; or
deriving positional information for the mechanically animated surface from input to one or more animatronic sensors associated with the animatronic and dynamically rendering a next frame of the content based on the positional information and, optionally, providing the next frame of content to the one or more projectors.

14. The method of any of claims 12 to 13, wherein rendering the content comprises rendering the content to be presented by two or more projectors.

15. A performance system configured to perform the method of any preceding claim;
a computer readable medium comprising instructions which, when executed by one or more processors of a performance system, cause the performance system to perform the method of any preceding claim; or
a system comprising one or more projectors, an animatronic comprising a mechanically animated surface, and a performance system in communication with the one or more projectors and the animatronic and configured to perform the method of any preceding claim, the performance system optionally comprising a real-time rendering engine in communication with the one or more projectors and a mechanical control system of the animatronic.
